# EUROPÄISCHE PATENTSCHRIFT

(11) **EP 0 866 290 B1**
(45) Veröffentlichungstag und Bekanntmachung des Hinweises auf die Patenterteilung: **21.05.2003**
(21) Anmeldenummer: 98102162.9
(22) Anmeldetag: 07.02.1998
(51) Int. Cl.: F25B 41/00, G02B 7/00

(54) **Druckdichtes Gehäuse und Verfahren zu seiner Herstellung**
Pressure-tight housing and method for its making
Boîtier étanche à la pression et procédé pour sa fabrication

(30) Priorität: 20.03.1997 DE 19711621
(43) Veröffentlichungstag der Anmeldung: 23.09.1998
(73) Patentinhaber: EMERSON ELECTRIC GmbH & Co., D-71332 Waiblingen (DE)
(72) Erfinder: Rutsch, Uwe, 74653 Künzelsau-Garnberg (DE); Tomski, Thomas, Dr., 70439 Stuttgart (DE)
(74) Vertreter: Manitz, Finsterwald & Partner

(56) Entgegenhaltungen:
- DE-A- 3 147 450
- US-A- 4 064 826
- US-A- 4 788 929
- US-A- 5 383 338

## Beschreibung

Die Erfindung betrifft ein Verfahren zur Herstellung eines druckdichten Gehäuses nach dem Oberbegriff von Anspruch 1.

Die Erfindung betrifft außerdem ein druckdichtes Gehäuse nach dem Oberbegriff von Anspruch 11.

Es sind Verfahren zur Herstellung eines druckdichten Gehäuses bekannt, bei denen zunächst ein Glaseinsatz in einen Metallring, üblicherweise aus Baustahl, eingeschmolzen wird. Der Metallring, wird dann mit einem Messinggehäuse über eine Schraubverbindung mit Dichtung verbunden. Eine andere Möglichkeit besteht darin, einen äußeren Rand des Gehäuses um den Metallring umzubördeln. Auch in diesem Fall ist eine Dichtung zwischen Metallring und einem zugeordneten Sitz im Gehäuse erforderlich.

Nach diesem Verfahren werden unter anderem Schaugläser zum Einsatz in Kühlmittelkreisläufen, beispielsweise für Kühlaggregate von Verkaufstheken, hergestellt. Diese Schaugläser werden im Kühlmittelkreislauf bevorzugt zwischen Kompressor und Expansionsventil eingesetzt, wo sich das Kühlmittel in der flüssigen Phase befindet. Sie dienen zur Überwachung der Feuchtigkeit im Kühlmittelkreislauf, die gering zu halten ist, da das Öl zur Schmierung des Kompressors, welches teilweise über den Kühlmittelkreislauf mittransportiert wird, feuchteempfindlich ist und daher in Abhängigkeit vom Feuchtegehalt ausgetauscht werden muss.

Die Schaugläser bestehen üblicherweise aus einem zylinderförmigen Messinggehäuse mit in einer Öffnung eingesetztem Rahmen mit eingeschmolzenem Glaseinsatz und zwei weiteren Öffnungen, in die je ein Anschlussrohr für Ab- und Zufluss des Kältemittels eingesetzt ist, sowie einem im Gehäuse angeordneten, durch den Glaseinsatz ablesbaren Indikator.

Diese Schaugläser sind also von dem Kühlmittel durchflossen und müssen daher druckdicht sein. Aufgrund steigender Anforderungen an die Umweltverträglichkeit von Kühlaggregaten müssen die Schaugläser hermetisch dicht sein, das heißt, es darf praktisch keinerlei Kühlmittel oder Schmieröl aus dem Kreislauf entweichen. Bei herkömmlichen Schaugläsern ist dies nicht immer gewährleistet, unter anderem weil die verwendeten Dichtungen von dem Kühlmittel und den in Verbindung mit der Feuchtigkeit gebildeten Säuren angegriffen werden. Die Verfahren zur Herstellung derartiger Schaugläser sind zudem aufwendig und daher kostenintensiv.

Ein Verfahren und ein Gehäuse der eingangs genannten Art sind aus der US-A-5,383,338 bekannt. Das Gehäuse besteht hier aus Kupfer, während das Schauglas mittels eines verzinnten Stahlringes darin eingelötet ist.

Die DE 31 47 450 A1 offenbart ein Schauglas, welches durch Verschraubung an dem aus Edelstahl bestehenden Gehäuse befestigt ist.

Der Erfindung liegt die Aufgabe zugrunde, ein Verfahren und eine Vorrichtung der eingangs genannten Art anzugeben, die diese Nachteile nicht aufweisen. Insbesondere soll ein kostengünstiges Verfahren zur Herstellung eines hermetisch dichten Gehäuses, insbesondere eines Schauglases für einen Kältekreislauf, sowie ein derartiges Gehäuse angegeben werden.

Diese Aufgabe wird beim Verfahren gemäß der vorliegenden Erfindung durch die Merkmale von Anspruch 1 gelöst, und beim Gehäuse durch die Merkmale von Anspruch 11.

Das erfindungsgemäße Verfahren ermöglicht die Herstellung eines Gehäuses sehr hoher Dichtigkeit, welches insbesondere den gesteigerten Anforderungen an die Umweltverträglichkeit von Kälteaggregaten Rechnung tragen kann. Die Schweiß- oder Hartlötverbindung zwischen Gehäuse und Rahmen ist im Gegensatz zu den bisherigen Lösungen absolut druckdicht und wird weder vom Kühlmittel noch von entstehenden Säuren angegriffen. Da auch die Einschmelzverbindung zwischen dem Glaseinsatz und dem Rahmen absolut druckdicht ist, kann so ein Gehäuse hergestellt werden, welches den genannten Anforderungen genügt. Die höheren Kosten aufgrund der Verwendung von Stahl oder Edelstahl werden dadurch zumindest ausgeglichen, daß das Gehäuse ohne jegliche spanabhebende Bearbeitung herstellbar ist. Durch die Verwendung von Edelstahl kann zudem die Wandstärke des Gehäuses verringert werden, wodurch einerseits ebenfalls die Kosten verringert und andererseits der erforderliche Energieeintrag zum Herstellen der Schweißoder Hartlötverbindung gering gehalten werden kann.

Eine weitere Reduzierung der Herstellungskosten kann dadurch erreicht werden, daß gemäß einer weiteren Ausgestaltung der Erfindung in einem gemeinsamen Heizschritt die Hartlötverbindung zwischen Gehäuse und Rahmen und das Einschmelzen des Glaseinsatzes in den Rahmen ausgeführt werden. Statt wie bisher in mehreren Schritten, wird nun also in einem gemeinsamen Heizschritt sowohl der Glaseinsatz in seinen Rahmen eingeschmolzen als auch der Rahmen mit dem Gehäuse verbunden. Dazu werden zunächst Gehäuse, Rahmen und Glaseinsatz in der erforderlichen Position zueinander angeordnet und durchlaufen anschließend einen Ofen mit einer zur Herstellung der Einschmelz- und Hartlötverbindungen geeigneten Temperatur.

Durch geeignete Wahl der Glasmenge für den Glaseinsatz und Dimensionierung des Metallrahmens sowie durch entsprechende Materialwahl wird sichergestellt, daß der in den Rahmen eingeschmolzene Glaseinsatz in diesem sicher gehalten ist. Durch spezielle Wahl wird hierbei erreicht, daß der Glaseinsatz in dem Rahmen nach dem Erkalten eine gewünschte Druckvorspannung zum Gehäuseinneren aufweist.

Gleichzeitig mit dem Einschmelzen des Glaseinsatzes entsteht auch die Hartlötverbindung zwischen Gehäuse und dem den Glaseinsatz umgebenden Rahmen. Vor dem Einbringen des Gehäuses in den Ofen bzw. vor oder während des Heizschrittes ist dazu das Bereitstellen eines Hartlotes für die Hartlötverbindung notwendig.

Nach einer Ausgestaltung der Erfindung wird das Gehäuse mit mindestens einer weiteren Öffnung versehen, in welche ein Anschlußrohr einsetzbar ist, welches insbesondere zum Anschluß des Gehäuses an einen Druckkreislauf dient. Das Anschlußrohr ist bevorzugt aus Metall, insbesondere Kupfer oder Kupfer-Bimetall gebildet und wird durch Hartlöten mit dem Gehäuse verbunden. Die Verwendung eines Anschlußrohres aus Kupfer-Bimetall dient dazu, den Anschluß der Vorrichtung an die Rohre eines Kühlmittelkreislaufes zu erleichtern. Hierzu sind die Rohre mit einer dünnen Kupferschicht versehen, die eine übliche Verbindung mit den Kupferrohren des Kühlmittelkreislaufes ermöglicht. Im übrigen bestehen die Rohre beispielsweise aus Edelstahl, welches günstig für die Verbindung mit dem Edelstahlgehäuse des Schauglases ist.

Bei einer besonders vorteilhaften Weiterbildung des Verfahrens wird die Hartlötverbindung des Anschlußrohres in einem gemeinsamen Heizschritt mit der Hartlötverbindung zwischen Gehäuse und Rahmen und/oder dem Einschmelzen des Glaseinsatzes in den Rahmen ausgeführt. Bevorzugt wird zumindest ein Anschlußrohr in eine in dem Gehäuse eingebrachte Öffnung, insbesondere eine Zu- oder Abflußöffnung, eingesetzt. Vorteilhaft ist dabei das Einsetzen des Anschlußrohrs durch eine Preßpassung in das Gehäuse. Bei diesem besonders vorteilhaften Verfahren durchläuft das Gehäuse mit Rahmen, Glaseinsatz und Anschlußrohren den Ofen für ein gemeinsames Aufheizen, so daß alle genannten Teile gleichzeitig, und damit schnell und kostengünstig miteinander verbunden werden.

Nach einer weiteren Ausgestaltung der Erfindung wird im Heizschritt eine wasserstoffreiche, trockene Atmosphäre verwendet. Diese Atmosphäre verhindert die Oxyd-Schichtbildung auf dem Edelstahlgehäuse, so daß dieses nach dem Heizschritt nicht aufwendig nachbehandelt werden muß. Außerdem wird hierdurch die Verbindung zwischen dem Glaseinsatz und dem Metallring verbessert. Der Heizschritt wird bevorzugt in einer Atmosphäre aus reinem Wasserstoff mit einem sehr geringen Taupunkt ausgeführt.

Der Rahmen kann mit dem Gehäuse aber auch durch ein Laserschweißverfahren verbunden werden. Dabei kommt es vorteilhafterweise zu geringer Temperaturentwicklung an der Nahtstelle.

Nach einer Ausgestaltung der Erfindung wird das Gehäuse aus einem Rohrstück hergestellt, in dessen eines Ende der Rahmen mit dem Glaseinsatz eingesetzt und dessen anderes Ende durch einen Boden verschlossen wird. Diese Ausgestaltung ist besonders einfach in der Herstellung und somit kostengünstig.

Durch die Verwendung eines separaten Bodens kann die Herstellung des übrigen Gehäuses durchgeführt werden, bevor in dem Gehäuse eine Anzeigevorrichtung untergebracht wird. Dies ist insbesondere dann wichtig, wenn wie bei Feuchtigkeitsindikatoren für Kühlkreisläufe die Indikatoren temperaturempfindlich sind. Während das Gehäuse den Ofen durchläuft, um die Einschmelz- und Hartlötverbindungen herzustellen, ist also der Indikator noch nicht in dem Gehäuse eingesetzt. Dies erfolgt nach Abkühlen des Gehäuses. Beim Hartlöten oder Verschweißen des Bodens mit dem Gehäuse kann das Gehäuse, beispielsweise durch Kupferklemmbacken, gekühlt werden, um eine zu starke Erhitzung des eingesetzten Indikators zu verhindern. Aufgrund der Verwendung von Edelstahl für das Gehäuse ist der Energieeintrag aber bereits sehr gering, insbesondere wenn die Wandstärke des Gehäuses entsprechend der hohen Stabilität des Edelstahles verringert wird. Eine weitere Verringerung des Temperatureintrages kann durch Verwendung eines Laserschweißverfahrens für die Verbindung des Bodens mit dem Gehäuse erreicht werden.

Das Gehäuse kann nach einer weiteren Ausgestaltung der Erfindung auch durch Tiefzieh- oder Innenhochdruckumformungsverfahren hergestellt sein. Dabei lassen sich vorteilhaft beliebige Gehäuseformen erzeugen, insbesondere Gehäuse mit bereits vorhandenem Boden. In diesem Fall wird dann bevorzugt ein Laserschweißverfahren zur Verbindung des den Glaseinsatz tragenden Rahmens mit dem Gehäuse verwendet.

Bevorzugt wird im Gehäuse eine Anzeigeeinrichtung, insbesondere ein Feuchtigkeitsindikator angeordnet. Wird das druckdichte Gehäuse in einem Kühlmittelkreislauf einer Kältemaschine eingesetzt, so zeigt der Feuchtigkeitsindikator den Feuchtegehalt des Kühlmittels an. Der Feuchtigkeitsindikator verfärbt sich je nach Feuchtegehalt, wodurch die Feuchtigkeit im Kühlmittel leicht ablesbar ist.

Nach einer Ausgestaltung der Erfindung wird zum Befestigen des Feuchtigkeitsindikators innerhalb des Gehäuses ein Träger mit radialen Armen verwendet. Der Träger wird beispielsweise unter Spannung seiner Arme innerhalb des Gehäuses eingesetzt.

Beim Einschmelzen des Glaseinsatzes in den Rahmen wird die Glasmenge bevorzugt so bemessen, daß sich im fertigen Gehäuse eine leicht nach außen gewölbte Scheibe ergibt. Hierdurch wird ein Vergrößerungseffekt erzielt, der das Ablesen des Indikators erleichtert.

Der Glaseinsatz wird nach einer weiteren Ausgestaltung der Erfindung während des Einschmelzvorganges im Heizschritt auf einem gerillten Träger, insbesondere einem stirnseitig mit einer Rillierung aus konzentrischen Kreisen versehenen Graphitdom gehalten. Dadurch werden auf der Innenseite der Glasscheibe Rillen erzeugt, die das Strömen des Kühlmittels erkennbar machen.

Das erfindungsgemäße Gehäuse hat den Vorteil, daß Schweißund Hartlötverbindung im Gegensatz zu Schraub- oder Weichlötverbindungen hermetisch dicht sind. Das erfindungsgemäße Gehäuse läßt sich darüber hinaus sehr kostengünstig herstellen, da Schweiß- und Hartlötverbindungen automatisiert in wenigen Schritten durchführbar sind.

Das erfindungsgemäße Gehäuse weist bevorzugt zumindest eine weitere Öffnung auf, in welche ein Anschlußrohr aus Metall, insbesondere Kupfer oder Kupfer-Bimetall eingesetzt ist, und zwischen dem Gehäuse und dem Anschlußrohr ist eine Schweißoder Hartlötverbindung vorhanden. In dieser Ausgestaltung ist das Gehäuse vorteilhaft als Schauglas einsetzbar, insbesondere in einem Kühlmittelkreislauf, wobei dann zwei Anschlußrohre für den Zu- und Abfluß des Kältemittels vorgesehen sind. Die Schweiß- oder Hartlötverbindungen gewährleisten wieder eine hohe Druckdichtigkeit.

Die Glasscheibe des Gehäuses ist vom Gehäuse nach außen gewölbt. Durch diese Form der Glasscheibe ist eine optische Vergrößerung vorsehbar. Die Glasscheibe kann auch mit einer Rillierung, insbesondere in Form von konzentrischen Kreisen versehen sein. Durch diese Rillierung läßt sich optisch feststellen, ob überhaupt ein Kältemittel im Kreislauf vorhanden ist.

Ein Ausführungsbeispiel der Erfindung ist in der Zeichnung dargestellt und wird nachfolgend beschrieben. Es zeigen, jeweils in schematischer Darstellung,
- Figur 1: eine perspektivische Ansicht eines erfindungsgemäßen Schauglases für einen Kältekreislauf,
- Figur 2: eine Draufsicht auf das Schauglas von Figur 1,
- Figur 3: einen Schnitt durch das Schauglas von Figur 1 entlang der Linie III-III in Figur 2, und
- Figur 4: einen Schnitt durch das Schauglas von Figur 1 entlang der Linie IV-IV in Figur 2.

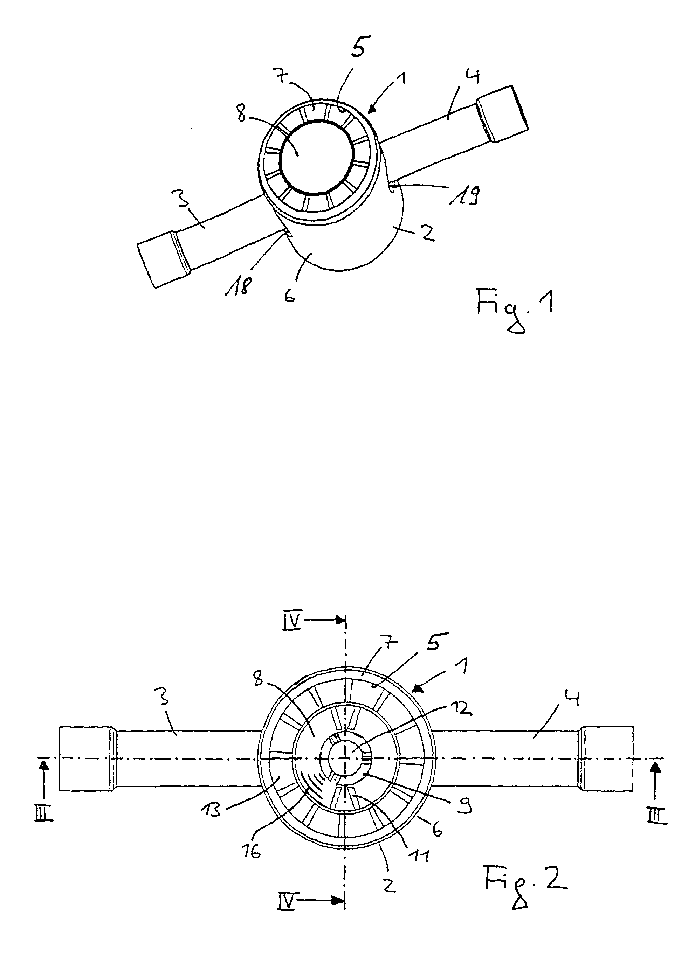

Das in Figur 1 gezeigte Schauglas 1 weist ein Gehäuse 2 mit zwei Anschlußrohren 3 und 4 auf. Das Gehäuse 2 umfaßt einen mit einer Öffnung 5 versehenen Gehäusekörper 6 und einen Rahmen 7. Gehäusekörper 6 und Rahmen 7 bestehen aus Edelstahl, wobei für den Rahmen 7 eine besondere Einschmelzlegierung verwendet wird.

In den Rahmen 7 ist eine Glasscheibe 8 eingeschmolzen, der Rahmen 7 ist mit dem Gehäusekörper 6 hart verlötet. Zwischen dem Gehäusekörper 6 und den Anschlußrohren 3, 4 sind ebenfalls Hartlötverbindungen vorhanden. Statt den Hartlötverbindungen ist jeweils auch eine Schweißverbindung, insbesondere eine Laserschweißverbindung, zwischen dem Gehäusekörper 6 und dem Rahmen 7 bzw. den Anschlußrohren 3 und 4 möglich. Dadurch ist das Gehäuse 2 sowohl druck- als auch gasdicht gegenüber der Umgebung abgeschlossen.

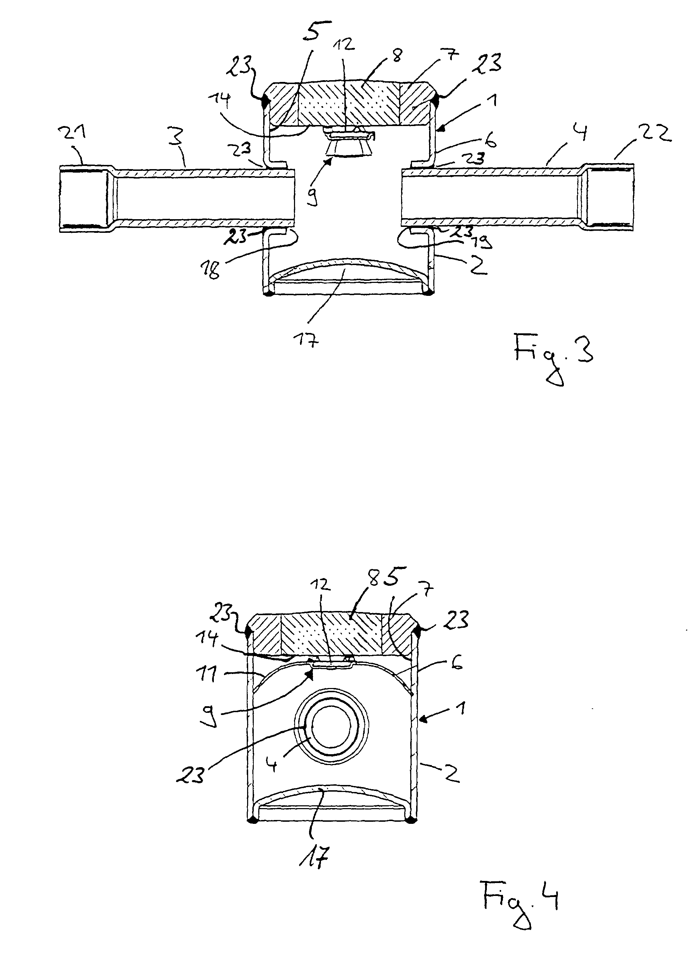

Wie in Figur 2 dargestellt, ist innerhalb des Gehäuses 2 ein Feuchtigkeitsindikator 9 angeordnet, der über einen mit dem Gehäusekörper 6 verbundenen Träger 11 innerhalb des Gehäuses 2 gelagert ist. Der Feuchtigkeitsindikator 9 weist ein Indikatormaterial 12 auf, das sich je nach Feuchtegehalt im Kältemittel unterschiedlich verfärbt. Auf der Oberseite des Rahmens 7 sind Farbkennfelder 13 angebracht, durch die sich der Feuchtegehalt im Kältemittel bestimmen läßt, indem die Färbung des Indikatormaterials 12 mit den verschiedenen Farbkennfeidern 13 verglichen wird.

Das Schauglas 1 weist an der Innenseite 14 der Glasscheibe 8 eingelassene konzentrische, kreisförmige Rillen 16 auf, die erkennbar machen, ob im Kältekreislauf überhaupt ein Kältemittel vorhanden ist. Aufgrund der veränderten Strömung des Kältemittels an den konzentrischen kreisförmigen Rillen 16 läßt sich nämlich das Fließen des Kältemittels erkennen.

Wie am besten in den Figuren 3 und 4 zu sehen ist, weist das Gehäuse 2 an seiner Unterseite einen Gehäuseboden 17 auf. Der Gehäuseboden 17 besteht ebenfalls aus Edelstahl und ist beispielsweise durch ein Wolfram-Inertgas (WIG)- oder Mikroplasma-Schweißverfahren mit dem unteren Rand des zylinderförmigen Gehäusekörpers 6 verbunden. Der Gehäuseboden 17 ist konkav zur Innenseite des Gehäuses 2 hin gewölbt. Die in den Rahmen 7 eingeschmolzene Glasscheibe 8 weist eine glatte und leicht konvex nach außen gekrümmte äußere Oberfläche auf, so daß der Feuchtigkeitsindikator 9 bei der Betrachtung vergrößert erscheint.

Für die Aufnahme der Anschlußrohre 3 und 4 weist der Gehäusekörper 6 an seinem Umfang zwei Gehäuseöffnungen 18, 19 auf, die beispielsweise durch Stanzen oder Bohren eingebracht sein können. An ihren vom Gehäusekörper abgewandten Enden sind die Anschlußrohre 3, 4 je mit einer Rohrmuffe 21, 22 mit gegenüber dem Durchmesser der Anschlußrohre 3, 4 aufgeweitetem Innendurchmesser versehen, um die Anschlußrohre 3, 4 mit den Rohren des Kältekreislaufs zu verbinden.

Zumindest die Rohrmuffen 21, 22 bestehen aus einem Bimetall-Material. Dabei dient eine dünne innere Kupferschicht zur einfachen Hartlötverbindung der Anschlußrohre 3, 4 mit Rohren eines Kältekreislaufs unter Verwendung von CuSn- oder Ni-Basislot. Außen bestehen die Muffen 21, 22 bevorzugt aus Edelstahl.

Beim erfindungsgemäßen Herstellungsverfahren für das hermetisch dichte Gehäuse des Schauglases 1 werden die Anschlußrohre 3, 4 in den Öffnungen 18, 19 des Gehäusekörpers 6 und der Rahmen 7 mit der einzuschmelzenden Glasscheibe 8 in der Öffnung 5 des Gehäusekörpers 6 angeordnet. Die Glasscheibe 8 kann während des Herstellungsprozesses auf einem Graphitdom gelagert sein, der an seiner Kontaktfläche zur Glasscheibe 8 konzentrische, kreisförmige Rillen aufweist. Zwischen dem Gehäusekörper 6 und dem Rahmen 7 sowie dem Gehäusekörper 6 und den Anschlußrohren 3, 4 wird Hartlot 23 aufgebracht.

Die derart angeordneten und in ihrer gewünschten Lage fixierten Teile des Gehäuses 2 werden dann in einen Ofen gefahren und dort derart erhitzt, daß in demselben Heizschritt einerseits die Glasscheibe in den Rahmen 7 einschmilzt und andererseits zwischen dem Gehäusekörper 6 und dem Rahmen 7 sowie dem Gehäusekörper 6 und den Anschlußrohren 3, 4 Hartlötverbindungen entstehen. Auf der Innenseite 14 der Glasscheibe 8 werden durch den Graphitdom die Rillen 16 gebildet.

Nach dem Abkühlen des so hergestellten Gehäuses 2 wird der Träger 11 mit dem Feuchtigkeitsindikator 9 in das Gehäuse 2 eingesetzt. Schließlich wird der beispielsweise durch Tiefziehen aus einem Edelstahlblech hergestellte Gehäuseboden 17 auf der Unterseite des Gehäusekörpers 6 eingeschweißt. Um die Hitzeentwicklung im Umfeld des Feuchtigkeitsindikators 12 gering zu halten, kann der Gehäusekörper 6 mit Kupferkühlbacken umfaßt werden, oder es wird ein Laserschweißverfahren verwendet.

Beim Einschmelzen der Glasscheibe 8 in den aus Edelstahl, insbesondere einer Einschmelzlegierung oder einem Duplex-Stahl, hergestellten Rahmen 7 wird infolge der Oberflächenspannung des Glaskörpers die dem Betrachter zugewandte Seite der Glasscheibe 8 glattgezogen, so daß es nicht notwendig ist, die Glasscheibe 8 zu schleifen. Durch die richtige Bemessung der Glasmenge kann die Glasscheibe 8 zudem konvex ausgebildet werden, wodurch eine gewünschte Vergrößerung des Indikators 12 erzielt wird.

### Bezugszeichenliste

- 1: Schauglas
- 2: Gehäuse
- 3: Anschlußrohr
- 4: Anschlußrohr
- 5: Öffnung
- 6: Gehäusekörper
- 7: Rahmen
- 8: Glasscheibe
- 9: Feuchtigkeitsindikator
- 10 11: Träger
- 12: Indikator
- 13: Farbkennfelder
- 14: Innenseite von 8
- 15 16: Rillen
- 17: Gehäuseboden
- 18: Öffnung
- 19: Öffnung
- 20 21: Rohrmuffe
- 22: Rohrmuffe
- 23: Hartlot

## Patentansprüche

1. Verfahren zur Herstellung eines druckdichten Gehäuses aus Metall, welches mindestens einen Einsatz (8) aus Glas aufweist, welcher in einen Metallrahmen (7) eingebracht wird, der in eine entsprechende Gehäuseöffnung (5) eingesetzt wird, wobei das Gehäuse (2) und der Rahmen (7) durch Schweißen, Laserschweißen oder Hartlöten miteinander verbunden werden, insbesondere für ein Schauglas (1) in einem Kältekreislauf,
**dadurch gekennzeichnet,**
**dass** das Gehäuse (2) und der Rahmen (7) aus Stahl, insbesondere Edelstahl hergestellt werden und dass der Einsatz (8) aus Glas durch Einschmelzen in den Metallrahmen (7) eingebracht wird.

2. Verfahren nach Anspruch 1,
**dadurch gekennzeichnet,**
**daß** in einem gemeinsamen Heizschritt die Hartlötverbindung zwischen Gehäuse (2) und Rahmen (7) und das Einschmelzen des Glaseinsatzes (8) in den Rahmen (7) ausgeführt werden.

3. Verfahren nach einem der vorhergehenden Ansprüche,
**dadurch gekennzeichnet,**
**daß** das Gehäuse (2) mit mindestens einer weiteren Öffnung (18, 19) versehen wird, in welche ein Anschlußrohr (3, 4) einsetzbar ist, welches insbesondere zum Anschluß des Gehäuses (2) an einen Druckkreislauf dient, wobei das Anschlußrohr (3, 4) bevorzugt aus Metall, insbesondere Kupfer oder Kupfer-Bimetall gebildet, und durch Hartlöten mit dem Gehäuse (2) verbunden wird.

4. Verfahren nach Anspruch 3,
**dadurch gekennzeichnet,**
**daß** die Hartlötverbindung des Anschlußrohres (3, 4) mit dem Gehäuse (2) in einem gemeinsamen Heizschritt mit der Hartlötverbindung zwischen Gehäuse (2) und Rahmen (7) und/oder dem Einschmelzen des Glaseinsatzes (8) in den Rahmen (7) ausgeführt wird.

5. Verfahren nach einem der vorhergehenden Ansprüche,
**dadurch gekennzeichnet,**
**daß** das Gehäuse (2) zur Herstellung der Hartlötund/oder Einschmelzverbindungen in einer zumindest wasserstoffreichen, trockenen Atmosphäre, bevorzugt in einer Atmosphäre aus reinem Wasserstoff mit einem Taupunkt von ca. minus 60° C oder darunter, erhitzt wird.

6. Verfahren nach einem der vorhergehenden Ansprüche,
**dadurch gekennzeichnet,**
**daß** das Gehäuse (2) durch Tiefziehen oder durch Innenhochdruckumformung oder aus einem vorgefertigten Rohrstück hergestellt wird, in dessen eines Ende der Rahmen (7) mit dem Glaseinsatz (8) eingesetzt und dessen anderes Ende durch einen Gehäuseboden (17) verschlossen wird.

7. Verfahren nach einem der vorhergehenden Ansprüche,
**dadurch gekennzeichnet,**
**daß** in dem Gehäuse (2) eine Anzeigeeinrichtung, insbesondere ein Feuchtigkeitsindikator (9) angeordnet wird.

8. Verfahren nach Anspruch 7,
**dadurch gekennzeichnet,**
**daß** ein Träger (11) mit radialen Armen für den Feuchtigkeitsindikator (9) verwendet wird und daß der Träger (11) unter Spannung seiner Arme in das Gehäuse (2) eingesetzt wird.

9. Verfahren nach einem der vorhergehenden Ansprüche,
**dadurch gekennzeichnet,**
**daß** die Glasmenge so bemessen wird, daß sich eine im fertigen Gehäuse (2) leicht nach außen gewölbte Glasscheibe (8) ergibt.

10. Verfahren nach einem der vorhergehenden Ansprüche,
**dadurch gekennzeichnet,**
**daß** der Glaseinsatz (8) während des Einschmelzvorganges auf einer gerillten Halterung, insbesondere einem stirnseitig mit einer Rillierung aus konzentrischen Kreisen versehenen Graphitdom, gehalten wird.

11. Druckdichtes Gehäuse (2) aus Metall mit einer Öffnung (5), in welche ein metallener Rahmen (7) mit einer Glasscheibe (8) eingesetzt ist, zur Aufnahme einer Anzeigeeinrichtung (9), insbesondere Schauglas für einen Kältekreislauf mit einem Feuchtigkeitsindikator (9), wobei das Gehäuse (2) und der Rahmen (7) zwischen sich eine Schweiß- oder Hartlötverbindung aufweisen,
**dadurch gekennzeichnet, dass** das Gehäuse (2) und der Rahmen (7) aus Stahl, insbesondere Edelstahl, gebildet sind und dass zwischen Rahmen (7) und Einsatz (8) aus Glas eine Einschmelzverbindung gebildet ist.

12. Gehäuse nach Anspruch 11,
**dadurch gekennzeichnet,**
**daß** das Gehäuse (2) mindestens eine weitere Öffnung (18, 19) aufweist, in welche ein Anschlußrohr (3, 4) aus Metall, insbesondere Kupfer oder Kupfer-Bimetall eingesetzt ist, und daß zwischen dem Gehäuse (2) und dem Anschlußrohr (3, 4) eine Schweiß- oder Hartlötverbindung vorhanden ist.

13. Gehäuse nach Anspruch 11 oder 12,
**dadurch gekennzeichnet,**
**daß** die Glasscheibe (8) von dem Gehäuse (2) nach außen gewölbt ist.

14. Gehäuse nach einem der Ansprüche 11 bis 13,
**dadurch gekennzeichnet,**
**daß** die Glasscheibe (8) auf ihrer Innenseite (14) mit einer Rillierung (16), insbesondere in Form von konzentrischen Kreisen, versehen ist.

15. Gehäuse nach einem der Ansprüche 11 bis 14,
**dadurch gekennzeichnet,**
**daß** der Feuchtigkeitsindikator (9) auf einem Träger (11) mit radialen Armen angeordnet ist, wobei die Arme beispielsweise unter Spannung im Gehäuse (2) abgestützt oder durch Punktschweißen mit diesem verbunden sind.

## Claims

1. A method for the manufacture of a pressure-tight housing made of metal which comprises at least one insert (8) made of glass which is introduced into a metal frame (7) which is inserted into a corresponding housing opening (5), with the housing (2) and the frame (7) being connected to one another by welding, laser welding or brazing, in particular for a sight glass (1) in a refrigerant circuit, **characterized in that** the housing (2) and the frame (7) are made of steel, in particular of stainless steel; and **in that** the insert (8) made of glass is introduced into the metal frame (7) by melting.

2. A method in accordance with claim 1, **characterized in that** the brazed connection between the housing (2) and the frame (7) and the melting of the glass insert (8) into the frame (7) are carried out in a common heating step.

3. A method in accordance with any one of the preceding claims, **characterized in that** the housing (2) is provided with at least one further opening (18, 19) into which a connection tube (3, 4) can be inserted which in particular serves for the connection of the housing (2) to a pressure circuit, with the connection tube (3, 4) preferably being formed of metal, in particular of copper or copper bimetal, and being connected to the housing (2) by brazing.

4. A method in accordance with claim 3, **characterized in that** the brazed connection of the connection tube (3, 4) to the housing (2) is carried out in a common heating step with the brazed connection between the housing (2) and the frame (7) and/or with the melting of the glass insert (8) into the frame (7).

5. A method in accordance with any one of the preceding claims, **characterized in that** the housing (2) is heated for the production of the brazed connection and/or of the melting connection in an at least hydrogen-rich, dry atmosphere, preferably in an atmosphere of pure hydrogen with a dew point of approximately minus 60°C or less.

6. A method in accordance with any one of the preceding claims, **characterized in that** the housing (2) is manufactured by deep drawing or by internal high pressure shaping or from a prefabricated piece of tube into whose one end the frame (7) with the glass insert (8) is inserted and whose other end is closed by a housing base (17).

7. A method in accordance with any one of the preceding claims, **characterized in that** an indicator device, in particular a moisture indicator (9), is arranged in the housing (2).

8. A method in accordance with claim 7, **characterized in that** a carrier (11) with radial arms is used for the moisture indicator (9); and **in that** the carrier (11) is inserted into the housing (2) with its arms under stress.

9. A method in accordance with any one of the preceding claims, **characterized in that** the amount of glass is dimensioned such that a slightly outwardly curved glass pane (8) results in the finished housing (2).

10. A method in accordance with any one of the preceding claims, **characterized in that** the glass insert (8) is held, during the melting procedure, on a grooved holder, in particular on a graphite dome provided with a grooving of concentric circles at its end face.

11. A pressure-tight housing (2) made of metal comprising an opening (5), into which a metallic frame (7) having a glass pane (8) is inserted, for the receiving of an indicator device (9), in particular a sight glass for a refrigerant circuit having a moisture indicator (9), with the housing (2) and the frame (7) having a weld connection or a brazed connection between them,
**characterized in that** the housing (2) and the frame (7) are formed of steel, in particular of stainless steel; and **in that** a melting connection is formed between the frame (7) and the insert (8) of glass.

12. A housing in accordance with claim 11, **characterized in that** the housing (2) has at least one further opening (18, 19) into which a connection tube (3, 4) made of metal, in particular of copper or copper bimetal, is inserted; and **in that** a weld connection or a brazed connection is present between the housing (2) and the connection tube (3, 4).

13. A housing in accordance with claim 11 or claim 12, **characterized in that** the glass pane (8) is outwardly curved from the housing (2).

14. A housing in accordance with any one of claims 11 to 13, **characterized in that** the glass pane (8) is provided at its inner side (14) with a grooving (16), in particular in the form of concentric circles.

15. A housing in accordance with any one of claims 11 to 14, **characterized in that** the moisture indicator (9) is arranged on a carrier (11) with radial arms, with the arms, for example, being supported under stress in the housing (2) or being connected to it by spot welding.

## Revendications

1. Procédé pour réaliser un boîtier en métal étanche la pression, qui comporte un au moins un insert (8) en verre qui est monté dans un cadre métallique (7) mis en place dans une ouverture correspondante (5) du boîtier, ledit boîtier (2) et ledit cadre (7) étant reliés l'un à l'autre par soudure, par soudure au laser ou par soudure avec apport de brasage fort, en particulier pour une fenêtre d'observation (1) dans un circuit frigorifique,
**caractérisé en ce que** le boîtier (2) et le cadre (7) sont réalisés en acier, en particulier en acier inoxydable, et **en ce que** l'insert en verre (8) est mis en place dans le cadre métallique (7) par fusion.

2. Procédé selon la revendication 1, **caractérisé en ce que** dans une opération de chauffage commune on exécute la liaison par apport de brasage fort entre le boîtier (2) et du cadre (7) et l'intégration de l'insert en verre (8) dans le cadre (7) par fusion.

3. Procédé selon l'une des revendications précédentes, **caractérisé en ce que** le boîtier (2) est pourvu d'au moins une autre ouverture (18, 19) dans laquelle est susceptible d'être mis en place un tube de raccordement (3, 4) qui sert en particulier au raccordement du boîtier (2) à un circuit sous pression, ledit tube de raccordement (3, 4) étant réalisé de préférence en métal, en particulier en cuivre, ou en un bimétal comprenant du cuivre, et relié au boîtier (2) par apport de brasage fort.

4. Procédé selon la revendication 3, **caractérisé en ce que** la liaison avec apport de brasage fort du tube de raccordement (3, 4) avec le boîtier (2) est exécutée dans une opération de chauffage commune avec la liaison avec apport de brasage fort entre le boîtier (2) et le cadre (7) et/ou avec l'intégration de l'insert en verre (8) dans le cadre (7) par fusion.

5. Procédé selon l'une des revendications précédentes, **caractérisé en ce que** pour établir les liaisons par apport de brasage fort et/ou par fusion, le boîtier (2) est réchauffé dans une atmosphère sèche et au moins riche en hydrogène, de préférence dans une atmosphère d'hydrogène pur avec un point de rosée d'environ - 60 °C ou moins.

6. Procédé selon l'une des revendications précédentes, **caractérisé en ce que** le boîtier (2) est réalisé par emboutissage profond ou par mise en forme sous haute pression interne, ou à partie à d'un morceau de tube préfabriqué dont une extrémité reçoit le cadre (7) avec l'insert en verre (8) et dont l'autre extrémité est refermée par un fond (17).

7. Procédé selon l'une des revendications précédentes, **caractérisé en ce qu'**un dispositif d'affichage, en particulier un indicateur d'humidité (9), est agencé dans le boitier (2).

8. Procédé selon la revendication 7, **caractérisé en ce que** l'on utilise un support (11) avec des bras radiaux pour l'indicateur d'humidité (9), et **en ce que** le support (11) est mis en place dans le boîtier (2) avec mise en contraintes de ses bras.

9. Procédé selon l'une des revendications précédentes, **caractérisé en ce que** la quantité de verre est ainsi choisie qu'il en résulte dans le boîtier fini (2) une plaque de verre (8) légèrement bombée vers l'extérieur.

10. Procédé selon l'une des revendications précédentes, **caractérisé en ce que** l'insert en verre (8) est maintenu pendant l'opération de fusion sur une monture nervurée, en particulier sur une coupole en graphite dotée sur sa face de frontale d'un rainurage composé de cercles concentriques.

11. Boîtier étanche à la pression (2) en métal comportant une ouverture (5) dans laquelle est mis en place un cadre métallique (7) avec une plaque de verre (8), destiné à recevoir un dispositif d'affichage (9), en particulier fenêtre d'observation pour un circuit frigorifique avec un indicateur d'humidité (9), ledit boîtier (2) et ledit cadre (7) présentant entre eux une liaison par soudure ou par soudure avec apport de brasage fort,
**caractérisé en ce que** le boîtier (2) et le cadre (7) sont réalisés en acier, en particulier en acier inoxydable, et **en ce qu'**une liaison avec fusion est établie entre le cadre (7) et l'insert (8) en verre.

12. Boîtier selon la revendication 11, **caractérisé en ce que** le boîtier (2) comporte au moins une autre ouverture (18, 19) dans laquelle est mis en place un tube de raccordement (3, 4) en métal, en particulier en cuivre ou en bimétal à base de cuivre, et **en ce qu'**il est prévu une liaison par soudure ou par soudure avec apport de brasage fort entre le boîtier (2) et le tube de raccordement (3, 4).

13. Boîtier selon l'une ou l'autre des revendications 11 et 12, **caractérisé en ce que** la plaque en verre (8) est bombée vers l'extérieur du boîtier (2).

14. Boîtier selon l'une des revendications 11 à 13, **caractérisé en ce que** la plaque en verre (8) est dotée sur sa face intérieure (14) d'un rainurage (16) en particulier sous la forme de cercles concentriques.

15. Boîtier selon l'une des revendications 11 à 14, **caractérisé en ce que** l'indicateur d'humidité (9) est agencé sur un support (11) avec des bras radiaux, lesdits bras étant par exemple soutenus dans le boîtier sous contrainte, ou reliés à celui-ci par soudure par points.
